# EUROPEAN PATENT APPLICATION

(11) **EP 3 260 701 A1**
(43) Date of publication of application: **27.12.2017**
(21) Application number: 17177041.5
(22) Date of filing: 21.06.2017
(51) Int. Cl.: F03G 7/10

(54) **OSCILLATING PENDULUM-BASED POWER GENERATION MECHANISM OF A POWER GENERATOR**

(30) Priority: 22.06.2016 TW 105209363 U; 10.04.2017 TW 106111853
(71) Applicant: Wu, Kun-Tien, Taipei City (TW)
(72) Inventor: Wu, Kun-Tien, Taipei City (TW)
(74) Representative: Becker, Eberhard

(57) **Abstract**

An oscillating pendulum-based power generation mechanism includes a stator device (10) and a rotor device (20). The stator device (10) has a stationary base (12, 13) and multiple first magnetic bars (11) mounted on an inner surface (14) of the stationary base (12, 13). The rotor device (20) has a spindle (21), pendulum assemblies (22) and second magnetic bars (23). The spindle (21) is rotatably mounted through the stationary base (12, 13) and connected with a power generator (31). Each pendulum assembly (22) connected with the spindle (21) includes a weight (222a-222d). The second magnetic bars (23) are distributed across the weights (222a-22sd) and repel the first magnetic bars (11). The repellant forces between the first magnetic bars (11) and the second magnetic bars (23) allow the pendulum assemblies (22) to be rotated to drive the power generator (31).

## Description

### 1. Field of the Invention

The present invention relates to a power generation mechanism and, more particularly, to an oscillating pendulum-based power generation mechanism of a power generator.

### 2. Description of the Related Art

Electricity is the indispensable energy in daily life for modern people to keep their mobile phones, computers, home appliances on and running and is the critical energy for manufacturing industry to maintain operation of all types of office equipment, electronic instruments and production equipment. Among all types of power generation, coal-fired power and nuclear power are generally used to drive power generators. In answer to the call of environmental advocacy, green power, such as hydraulic power, solar power, wind power, geothermal power and tidal power, has prevailed around the world lately to drive power generators. Finding clean power causing no environmental pollution is a persistent goal that the human beings must face and tackle.

An objective of the present invention is to provide an oscillating pendulum-based power generation mechanism of a power generator for driving a power generator to rotate for power generation.

To achieve the foregoing objective, the oscillating pendulum-based power generation mechanism of a power generator includes a stator device and a rotor device.

The stator device has at least one stationary base and multiple first magnetic bars.

Each one of the at least one stationary base has an inner surface and a chamber.

The inner surface is axially and annularly formed around an inner wall of the stationary base.

The chamber is defined within the inner surface.

The multiple first magnetic bars are mounted around the inner surface of the at least one stationary base.

The rotor device is mounted inside the chamber and has a spindle, multiple pendulum assemblies, and multiple second magnetic bars.

The spindle is axially and rotatably mounted through the at least one stationary base with one end of the spindle adapted to be connected with a shaft of a power generator, and has a connection surface formed on a periphery of the spindle.

Each pendulum assembly has an arm and a weight.

The arm has an upper end and a lower end.

The upper ends of the multiple pendulum assemblies are securely and sequentially connected with the connection surface of the spindle in an axial direction.

The lower end faces the inner surface.

The weight is securely connected with the lower end of the arm of the pendulum assembly.

The multiple second magnetic bars are mounted in the weights of each pendulum assembly and repel the multiple first magnetic bars of the stator device. Each second magnetic bar has a first end point and a second end point along a rotation direction of the multiple pendulum assemblies. A distance from the first end point of the second magnetic bar to the center axis of the spindle differs from that from the second end point of the second magnetic bar to a center axis of the spindle for the second magnetic bars to be obliquely arranged on a corresponding pendulum assembly with respect to the center axis of the spindle.

According to the foregoing structure of the oscillating pendulum-based power generation mechanism, the first magnetic bars are fastened on the at least one stationary base and the second magnetic bars are mounted on the rotatable pendulum assemblies. Therefore, the repellant forces generated between the first magnetic bars and the second magnetic bars drive the pendulum assemblies to rotate within the at least one stationary base and further drive a power generator in connection with the spindle to rotate for power generation.

Other objectives, advantages and novel features of the invention will become more apparent from the following detailed description when taken in conjunction with the accompanying drawings.

### In the drawings

Fig. 1 is a schematic plane view of an embodiment of an oscillating pendulum-based power generation mechanism in accordance with the present invention connected to a power generator through a transmission mechanism;
Fig. 2 is a front view of at least one stationary base and multiple pendulum assemblies of a first embodiment of the oscillating pendulum-based power generation mechanism in Fig. 1;
Fig. 3 is a front view of a first stationary base and the pendulum assemblies mounted therein of the oscillating pendulum-based power generation mechanism in Fig. 1;
Fig. 4 is a front view of a second stationary base and the pendulum assemblies mounted therein of the oscillating pendulum-based power generation mechanism in Fig. 1;
Fig. 5 is an enlarged view of Fig. 2;
Fig. 6 is a front view of at least one stationary base and multiple pendulum assemblies of a second embodiment of the oscillating pendulum-based power generation mechanism in Fig. 1.
Fig. 7 is a schematic plane view of the stationary base and the pendulum assemblies mounted therein of another embodiment of an oscillating pendulum-based power generation mechanism in accordance with the present invention; and
Fig. 8 is a schematic plane view of a kinetic input device in accordance with the present invention.

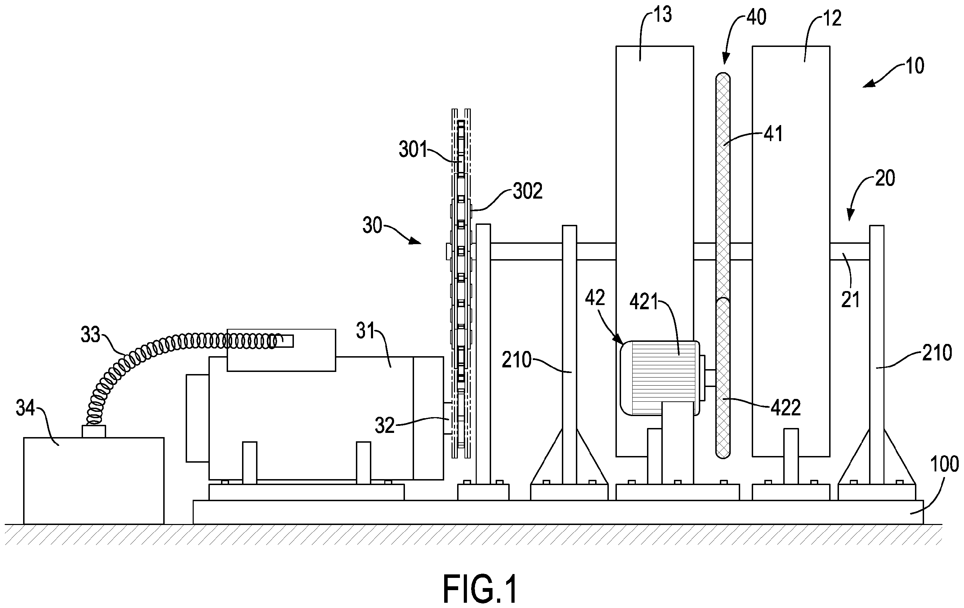

With reference to Fig. 1, an oscillating pendulum-based power generation mechanism in accordance with the present invention includes a stator device 10 and a rotor device 20 and may further include a kinetic input device.

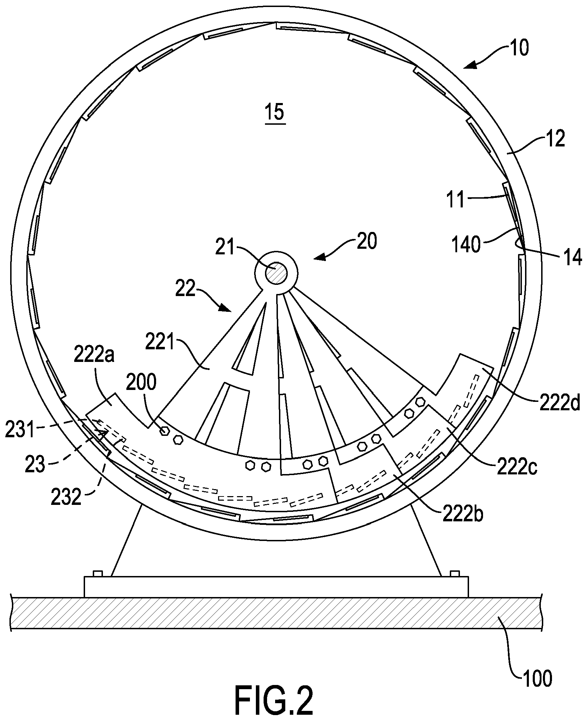

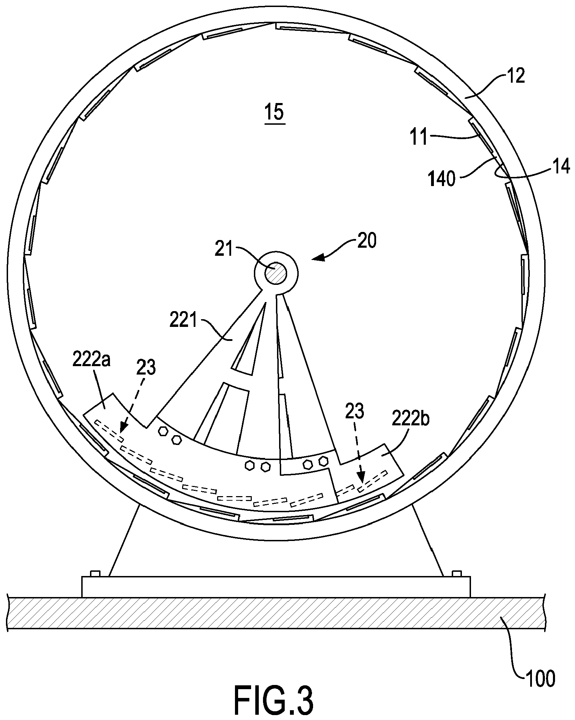

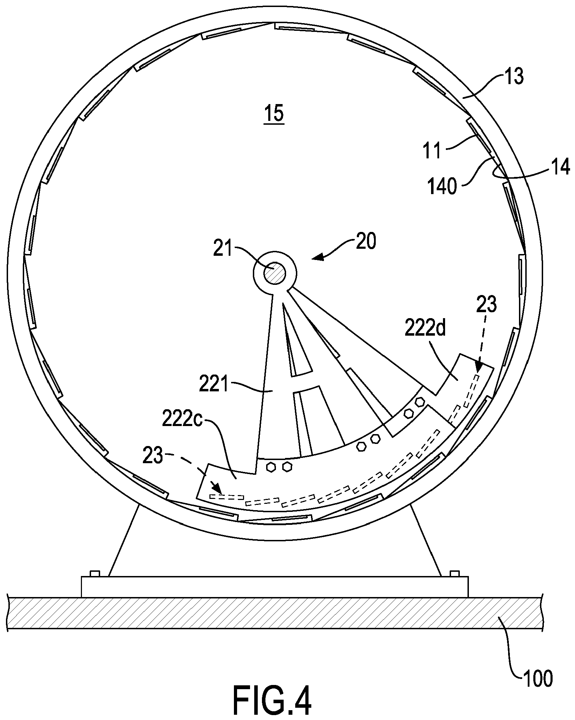

With reference to Figs. 1 and 3, the stator device 10 has at least one stationary base and multiple first magnetic bars 11. In the present embodiment, a first stationary base 12 and a second stationary base 13 are juxtaposedly arranged. The first stationary base 12 and the second stationary base 13 are securely mounted on a seat 100. With reference to Figs. 2 and 4, a first embodiment of the oscillating pendulum-based power generation mechanism in Fig. 1 is shown, and each of the first stationary base 12 and the second stationary base 13 has an inner surface 14 axially and annularly formed around an inner wall of a corresponding one of the first stationary base 12 and the second stationary base 13 and a chamber 15 defined within the inner surface 14. The first magnetic bars 11 are obliquely mounted on the inner surface 14 of the first stationary base 12 and the second stationary base 13 with an identical angle included between each first magnetic bar 11 and the inner surface 14. The multiple first magnetic bars 11 may be electromagnets capable of generating a 50,000-gauss magnetic field. Structure and concept of electromagnet is common knowledge. For example, the electromagnet may be a coil, and when current is applied to flow through the coil, electromagnetic field is generated according to the direction along which the current flows. The first stationary base 12 and the second stationary base 13 are structurally identical. Given the first stationary base 12 as an example, multiple teeth 140 are formed around the inner surface 14, and the multiple first magnetic bars 11 are mounted on and are identically oblique to the respective teeth 140. The first stationary base 12, the second stationary base 13 and the teeth 140 may be made of an aluminum alloy.

The rotor device 20 is mounted inside the chamber 15 and includes a spindle 21, multiple pendulum assemblies 22 and multiple second magnetic bars 23. The spindle 21 may be mounted to a spindle seat 210 through a bearing. The spindle 21 is axially and rotatably mounted through the first stationary base 12 and the second stationary base 13, and has a connection surface formed on a periphery of the spindle 21. The connection surface may be multiple planes formed around a circumferential perimeter or may have multiple recesses, bumps or spines that engage the multiple pendulum assemblies 22. Generally, any connection surface that is structurally feasible for the multiple pendulum assemblies 22 to be sequentially securely mounted around the spindle 21 can do the job. As pertaining to those used for regular mechanical engagement and not being the focus of the present invention, the forms of the connection surface are not elaborated here. With reference to Fig. 1, one end of the spindle 21 is mounted through a transmission mechanism to drive a shaft 32 of a power generator 31. The transmission mechanism includes a chainwheel 301 and a chain 302. The end of the spindle 21 is centrally mounted through the chainwheel 301. The chain 302 is mounted around the chainwheel 301 and the shaft 302 of the power generator 31.

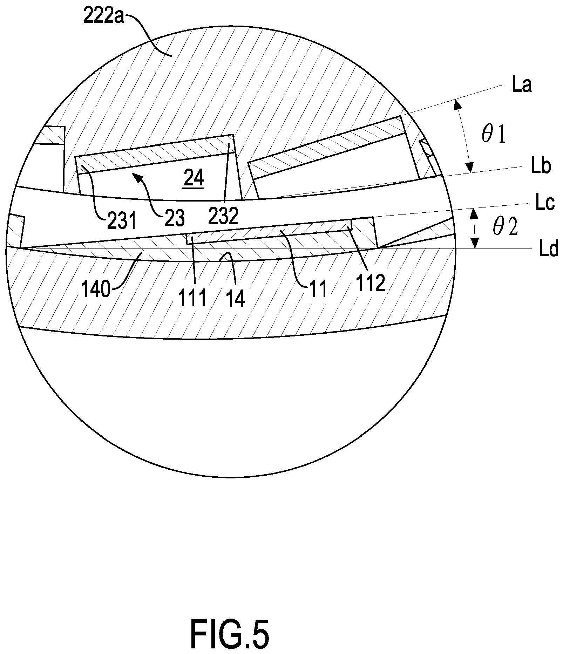

The multiple pendulum assemblies 22 are structurally identical. With further reference to Fig. 2, each pendulum assembly 22 includes an arm 221 and a weight 222a. With reference to Fig. 5, each weight 222a has multiple slots 24 formed in a surface of the weight 222a for the multiple second magnetic bars 23 to be mounted in the respective slots 24. The multiple second magnetic bars 23 may be securely mounted in the respective slots 24 by engagement, tight-fitting, insertion or other fasteners. Upper ends of the arms 221 of the multiple pendulum assemblies 22 are securely and sequentially connected with the connection surface of the spindle 21 in an axial direction, and lower ends of the arms 221 of the multiple pendulum assemblies 22 face the inner surface 14. The weight 222a of each pendulum assembly 22 is securely connected with the lower end of the arm 221 of the pendulum assembly 22. In the present embodiment, there are four pendulum assemblies 22 and four weights 222a, 222b, 222c and 222d totally. The weights 222a ∼ 222d are spaced apart from the inner surface 14 or the teeth 140 by a gap.

The second magnetic bars 23 are obliquely spread across bottom portions of the weights 222a ∼ 222d of the respective pendulum assemblies 22 in an identical fashion with respect to a center axis of the spindle 21. With further reference to Fig. 2, each second magnetic bar 23 on a corresponding pendulum assembly 22 has a first end point 231 and a second end point 232 along a rotation direction of the multiple pendulum assemblies 22. A distance from the first end point 231 to the center axis of the spindle 21 differs from that from the second end point 232 to the center axis of the spindle 21, such that the second magnetic bars 23 can be obliquely arranged on the pendulum assemblies 22 with respect to the center axis of the spindle 21. The second magnetic bars 23 may be permanent magnets capable of generating a 50,000-gauss magnetic field. The arms 221 are made of cast steel. The weights 222a ∼ 222d may be made of stainless steel. With further reference to Fig. 2, each weight 222a ∼ 222d is fastened on a corresponding arm 221 by bolts 220. The second magnetic bars 23 repel the first magnetic bars 11. For example, the magnetic north poles N of the second magnetic bars 23 face the magnetic north poles N of the first magnetic bars 11 or the magnetic south poles S of the second magnetic bars 23 face the magnetic south poles S of the first magnetic bars 11 to generate repellent force arising from same magnetic poles facing each other.

With further reference to Fig. 2, the four pendulum assemblies 22 are arranged one next to another with each pendulum assembly 22 partially overlapping another pendulum assembly 22 next thereto. With reference to Fig. 3, as far as the first stationary base 12 is concerned, two adjacent pendulum assemblies 22 of the four pendulum assemblies 22 are located inside the first stationary base 12, and the weight 222b of one of adjacent two of the four pendulum assemblies 22 is ahead of the weight 222a of the other pendulum assembly 22 by a quarter of an arc perimeter of the weights 222a ∼ 222b. Similarly, with reference to Fig. 4, as far as the second stationary base 13 is concerned, another adjacent two of the four pendulum assemblies 22 are located inside the second stationary base 13, and the weight 222d of one of the two adjacent pendulum assemblies 22 is ahead of the weight 222c of the other of the two adjacent pendulum assemblies 22 by a quarter of an arc perimeter of the weights 222c ∼ 222d. Besides, the weight 222c is ahead of the weight 222b by a quarter of an arc perimeter of the weights 222a ∼ 222b. In other words, three quarters of the arc perimeter of the weight 222b, 222d of one of any two adjacent pendulum assemblies 22 overlaps the weight 222a, 222c of the other of the two adjacent pendulum assemblies 22. As can be seen from Fig. 2, the weights 222a ∼ 222d of the four pendulum assemblies 22 are distributed across one third of the circumference of the inner surface 14 or are selectively distributed across consecutive six of the teeth 140 adjacent to the weights 222a ∼ 222d of the four pendulum assemblies 22.

The tilted arrangement of the first magnetic bars 11 and the second magnetic bars 23 is illustrated in Figs. 2 and 5. The weights 222a ∼ 222d of the pendulum assemblies 22 take the form of arched blocks and respectively correspond to multiple annular portions of the inner surface 14. A first angle θ1 included between a line La passing through the first end point 231 and the second end point 232 of each second magnetic bar 23 and a tangent to a point at an arched surface of a corresponding weight 222a ∼ 222d corresponding to the first end point 231 should be greater than or equal to 10 degrees and less than or equal to 15 degrees, i.e. 10 ≤ θ1 ≤ 15°. Each first magnetic bar 11 has a first end point 111 and a second end point 112 along a rotational direction of the pendulum assemblies 22 with a direction from the first end point 111 to the second end point 112 identical to that from the first end point 231 to the second end point 232 of each second magnetic bar 23. On the other hand, a distance from the first end point 111 of the first magnetic bar 11 to the center axis of the spindle 21 differs from that from the second end point 112 of the first magnetic bar 11 to the center axis of the spindle 21, such that the first magnetic bar 11 can be obliquely arranged with respect to the center axis of the spindle 21. With further reference to Fig. 5, a second angle θ2 included between a line Lc passing through the first end point 111 and the second end point 112 of each first magnetic bar 11 and a line Ld passing through two end points of a chord of the inner surface 14 contacting one of the teeth 140 corresponding to the first magnetic bar 11 is greater than or equal to 5 degrees and is less than or equal to 10 degrees, i.e. 5 ≤ θ2 ≤ 10 . In the present embodiment, preferably, θ1 is 10 degrees and θ2 is 5 degrees.

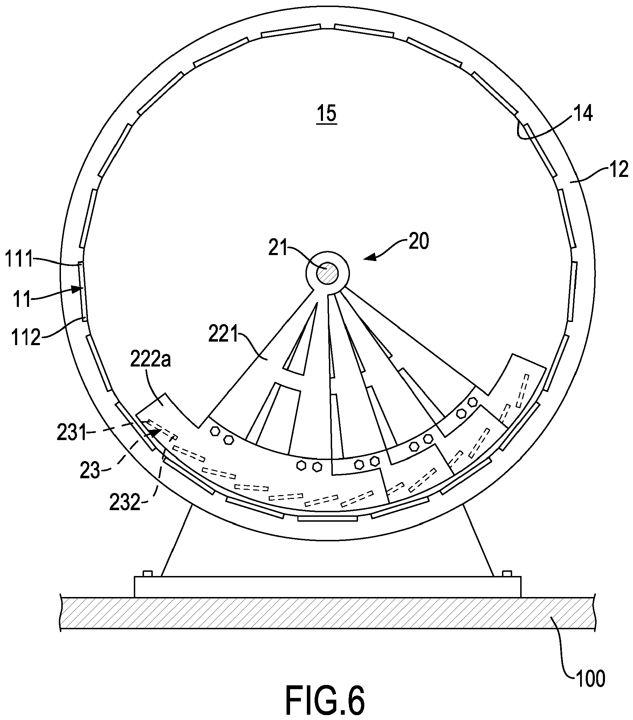

With reference to Fig. 6, a second embodiment of the oscillating pendulum-based power generation mechanism in Fig. 1 differs from the first embodiment in that a distance from the first end point 111 of the first magnetic bar 11 to the center axis of the spindle 21 is equal to that from the second end point 112 of the first magnetic bar 11 to the center axis of the spindle 21, and a first angle (corresponding to θ1 in Fig. 5) included between a line passing through the first end point 231 and the second end point 232 of each second magnetic bar 23 and a tangent to a point at an arched surface of a corresponding weight 222a ∼ 222d corresponding to the first end point 231 is preferred to be 15 degrees.

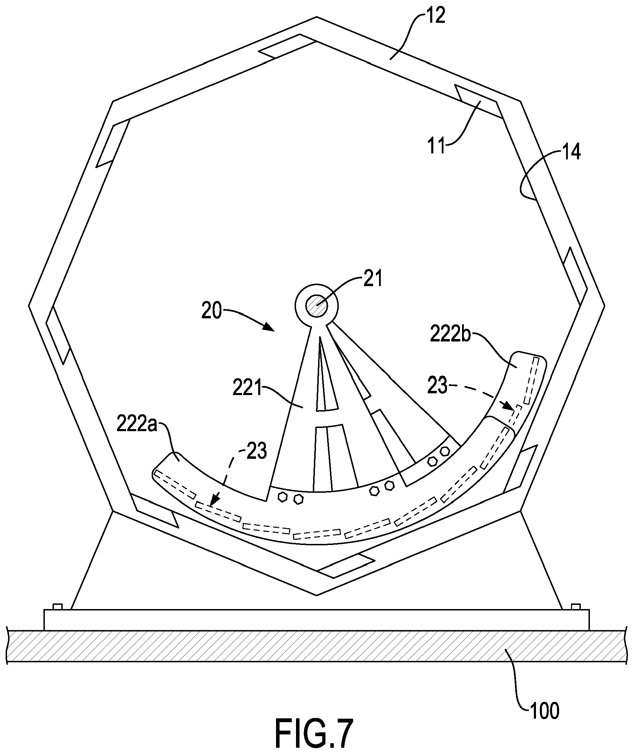

The inner surfaces 14 of the first stationary base 12 and the second stationary base 13 may also be polygonal annular surfaces. With reference to Fig. 7, another embodiment of an oscillating pendulum-based power generation mechanism of a power generator in accordance with the present invention is shown. The structures of the first stationary base 12 and the second stationary base 13 are the same. Fig. 7 shows the first stationary base 12 as an example. The first stationary base 12 is an octagonal seat. The inner surface 14 of the first stationary base 12 is also an octagonal inner surface with eight planar surfaces, each of which is disposed with one of the first magnetic bars 11. Therefore, the present embodiment has eight first magnetic bars 11. In the first stationary base 12, as shown in Fig. 7, the weights 222a, 222b of two of the pendulum assemblies 22 are distributed over three of the first magnetic bars 11. In particular, the first magnetic bars 11 can be electromagnets. The structure and principle of the electromagnets are well-known. For example, the electromagnet may be a coil with a covering layer on a surface thereof. The covering layer may be a stainless-steel layer to reduce the working temperature of the electromagnet and magnetic interference caused by the electromagnet.

A kinetic input device in accordance with the present invention is connected with the spindle 21 of the rotor device 20 for transmitting kinetic energy to the spindle 21, thereby driving the spindle 21 to rotate. For example, the kinetic input device may be a wind power generation device or a water power generation device, including a driving mechanism and blades. The spindle 21 is connected to the blades via the driving mechanism. When the blades are propelled by wind or water flow to rotate, the spindle 21 is driven by the driving mechanism to rotate.

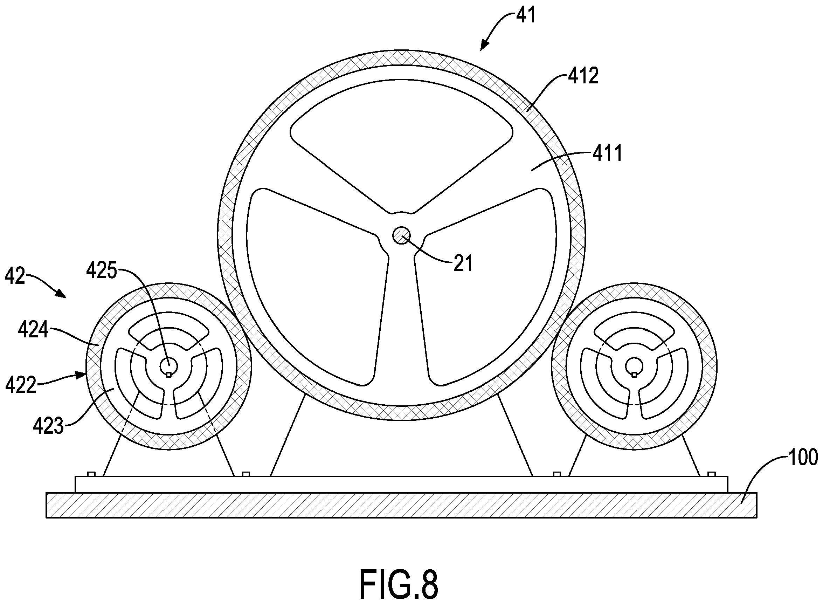

With reference to Figs. 1 and 8, the kinetic input device may be an electrical device 40 that includes a rotating wheel 41 and at least one driving wheel set 42. This embodiment has two driving wheel sets 42 as an example. As shown in Fig. 1, the rotating wheel 41 is disposed between the first stationary base 12 and the second stationary base 13. As shown in Fig. 8, the rotating wheel 41 includes a rotating wheel frame 411 and a rotating wheel tire 412. The center of the rotating wheel frame 411 is fixed to the spindle 21. The rotating wheel tire 412 is mounted around a periphery of the rotating wheel frame 411. Each of the driving wheel sets 42 includes a driving motor 421 and a driving wheel 422. The driving motor 421 is disposed on the seat 100. The driving wheel 422 includes a driving wheel frame 423 and a driving wheel tire 424. The center of the driving wheel frame 423 is fixed to a driving axle 425 of the driving motor 421. The driving wheel tire 424 is mounted around a periphery of the driving wheel frame 423. An outer rim of the driving wheel tire 424 is in contact with the rotating wheel tire 412. When the driving motor 421 starts running, the driving wheel tire 424 in rotation drives the rotating wheel tire 412 to rotate by friction, so that the rotating wheel 41 drives the spindle 21 to rotate.

It should be emphasized that when the rotating speed of the spindle 21 is lower than a predetermined value or the spindle 21 remains still, the kinetic input device can be started to rotate the spindle 21. Once the rotating speed of the spindle 21 reaches the predetermined value or above, the kinetic input device can be stopped. When the kinetic input device is the electrical device 40, such a mechanism can prevent the driving motor 421 thereof from continuously consuming electrical power, thereby reducing electrical power consumption.

As the first magnetic bars 11 are fastened on the first stationary base 12 and the second stationary base 13 and the second magnetic bars 23 are fastened on those rotatable pendulum assemblies 22, the obliquely arranged second magnetic bars 23 are distributed over the multiple first magnetic bars 11 for the repellant forces generated between the first magnetic bars 11 and the second magnetic bars 23 and acted on the respective second magnetic bars 23 in normal directions thereto to drive those pendulum assemblies 22 to rotate, such that the spindle 21 is rotated to drive the shaft 32 of the power generator 31 to rotate through the transmission mechanism for power generation. The power generator 31 is electrically connected to a load 34 through an electric cable 33 and may be a rechargeable battery. The power generated by the power generator 31 can be stored in the load 34 or can be further utilized.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. An oscillating pendulum-based power generation mechanism of a power generator, **characterized in that** the oscillating pendulum-based power generation mechanism comprises:
a stator device (10) having:
at least one stationary base (12, 13), each one of the at least one stationary base (12, 13) having:
an inner surface (14) axially and annularly formed around an inner wall of the stationary base (12, 13); and
a chamber (15) defined within the inner surface (14); and
multiple first magnetic bars (11) mounted around the inner surface of the at least one stationary base; and
a rotor device (20) mounted inside the chamber (15) and having:
a spindle (21) axially and rotatably mounted through the at least one stationary base (12, 13) with one end of the spindle (21) adapted to be connected with a shaft (32) of a power generator (31), and having a connection surface formed on a periphery of the spindle (21);
multiple pendulum assemblies (22), each pendulum assembly (22) having:
an arm (221) having:
an upper end, wherein the upper ends of the multiple pendulum assemblies are securely and sequentially connected with the connection surface of the spindle in an axial direction; and
a lower end facing the inner surface; and
a weight (222a-222d) securely connected with the lower end of the arm (221) of the pendulum assembly (22); and
multiple second magnetic bars (23) mounted in the weights (222a-222d) of each pendulum assembly (22) and repelling the multiple first magnetic bars (11) of the stator device (10), each second magnetic bar (23) having a first end point and a second end point along a rotation direction of the multiple pendulum assemblies (22), wherein a distance from the first end point of the second magnetic bar (23) to the center axis of the spindle (21) differs from a distance from the second end point of the second magnetic bar (23) to the center axis of the spindle (21) for the second magnetic bars (23) to be obliquely arranged on a corresponding pendulum assembly (22) with respect to the center axis of the spindle (21).

2. The oscillating pendulum-based power generation mechanism as claimed claim 1, further comprising a kinetic input device connected to the spindle (21) of the rotor device (20).

3. The oscillating pendulum-based power generation mechanism as claimed in claim 2, wherein the inner surface of each of the at least one stationary base (12, 13) is annular, the multiple pendulum assemblies (22) are arranged one next to another with each pendulum assembly (22) partially overlapping another pendulum assembly (22) next thereto;
the weight of one of each adjacent two of the multiple pendulum assemblies (22) is ahead of the weight of the other pendulum assemblies (22) by a quarter, and overlaps the weight of the other pendulum assemblies (22) by three quarters of an arc perimeter of the weight; and
the weights (222a-222d) of the multiple pendulum assemblies (22) are distributed across one third of a circumference of the inner surface of the stationary base (12).

4. The oscillating pendulum-based power generation mechanism as claimed in claim 1, wherein the first magnetic bars (11) are obliquely mounted on the inner surface (14) of the at least one stationary base (12, 13) with an identical angle included between each first magnetic bar (11) and the inner surface (14), the weights (222a-222d) of the multiple pendulum assemblies (22) are selectively distributed across consecutive ones of the multiple first magnetic bars (11) adjacent to the weights (222a-222d) of the multiple pendulum assemblies (22).

5. The oscillating pendulum-based power generation mechanism as claimed in claim 4, wherein the weight (222a-222d) of each of the pendulum assemblies (22) is an arched block corresponding to the inner surface (14), and a first angle included between a line passing through the first end point and the second end point of each second magnetic bar (23) and a tangent to a point at an arched surface of a corresponding weight (222a-222d) corresponding to the first end point is greater than or equal to 10 degrees and smaller than or equal to 15 degrees.

6. The oscillating pendulum-based power generation mechanism as claimed in claim 5, wherein each first magnetic bar (11) has a first end point (111) and a second end point (112) along a rotational direction of the pendulum assemblies (22), and a distance between the first end point (111) of each first magnetic bar (11) and the center axis of the spindle (21) is different from a distance between the second end point (112) of the first magnetic bar (11) to the center axis of the spindle (21).

7. The oscillating pendulum-based power generation mechanism as claimed in claim 6, wherein the inner surface (14) of each of the at least one stationary base (12, 13) is provided with multiple teeth (140), the multiple first magnetic bars (11) are disposed on the respective teeth (140), a second angle included between a line passing through the first end point and second end point of each first magnetic bar (11) and a line passing through two end points of a chord of the inner surface (14) contacting one of the teeth (140) corresponding to the first magnetic bar (11) is 5 degrees; and the first angle is 10 degrees.

8. The oscillating pendulum-based power generation mechanism as claimed in claim 5, wherein each first magnetic bar (11) has a first end point (111) and a second end point (112) along a rotational direction of the pendulum assemblies (12,13), a distance between the first end point (111) of each first magnetic bar (11) and the center axis of the spindle (21) is equal to a distance between the second end point (112) of the first magnetic bar (11) and the center axis of the spindle (21), and the first angle is 15 degrees.

9. The oscillating pendulum-based power generation mechanism as claimed in claim 2, wherein the inner surface (14) of each of the at least one stationary base (12, 13) is an octagonal inner surface with eight planar surfaces, each of the eight planar surfaces is disposed with one of the multiple first magnetic bars (11), and the weights (14) of two of the pendulum assemblies (12, 13) in the at least one stationary base (12, 13) are distributed over three of the first magnetic bars (11).

10. The oscillating pendulum-based power generation mechanism as claimed in any one of claims 2 to 9, wherein the kinetic input device is an electrical device (40) that comprises:
a rotating wheel (41), which includes a rotating wheel frame (411) and a rotating wheel tire (412), with a center of the rotating wheel frame (411) fixed to the spindle (21) and the rotating wheel tire (412) mounted around a periphery of the rotating wheel frame (411); and
a driving wheel set (42), which includes a driving motor (421) and a driving wheel (422) having a driving wheel frame (423) and a driving wheel tire (424), with the center of the driving wheel frame (423) fixed to a driving axle of the driving motor (421) and the driving wheel tire (424) mounted around a periphery of the driving wheel frame (423) and being in contact with the rotating wheel tire (412).
